# EUROPÄISCHE PATENTSCHRIFT

(11) **EP 3 685 251 B1**
(45) Veröffentlichungstag und Bekanntmachung des Hinweises auf die Patenterteilung: **22.02.2023**
(21) Anmeldenummer: 18772769.8
(22) Anmeldetag: 11.09.2018
(51) Int. Cl.: G06F 3/0481, G06F 9/451, A47L 15/00, A47J 36/32, A47J 31/52, A47L 15/42, D06F 34/28, F24C 7/08, F25D 29/00, G06F 8/38, D06F 101/00

(54) **VERFAHREN ZUM BETREIBEN EINES HAUSHALTSGERÄTS UND HAUSHALTSGERÄT**
METHOD FOR OPERATING A HOUSEHOLD APPLIANCE AND HOUSEHOLD APPLIANCE
PROCÉDÉ DE FONCTIONNEMENT D'UN APPAREIL ÉLECTROMÉNAGER ET APPAREIL ÉLECTROMÉNAGER

(30) Priorität: 21.09.2017 DE 102017216760
(43) Veröffentlichungstag der Anmeldung: 29.07.2020
(73) Patentinhaber: BSH Hausgeräte GmbH, 81739 München (DE)
(72) Erfinder: HECKES, Matthias, 80807 München (DE); ISBILEN, Ersin, 89415 Lauingen (DE); FRATTESI, Stefano, 81541 München (DE); HÄPP, Claudia, 85591 Vaterstetten (DE); KRÄNZLE, Bernd, 89561 Frickingen (DE); LLOREDA PUENTE, Paula, 81667 München (DE)
(86) Internationale Anmeldenummer: PCT/EP2018/074377
(87) Internationale Veröffentlichungsnummer: WO 2019/057538

(56) Entgegenhaltungen:
- US-A1- 2007 271 512
- US-A1- 2008 235 613
- US-A1- 2011 120 316

## Beschreibung

Die vorliegende Erfindung betrifft ein Verfahren zum Betreiben eines Haushaltsgeräts mit einer Benutzerschnittstelle zur Bedienung des Haushaltsgeräts durch eine Mehrzahl von Benutzern sowie ein solches Haushaltsgerät.

Haushaltsgeräte, wie beispielsweise Haushalts-Geschirrspülmaschinen, weisen eine Benutzerschnittstelle zur Bedienung des Haushaltsgeräts auf. Zum Beispiel umfasst eine solche Benutzerschnittstelle eine Anzahl von Bedien-Knebeln, mittels denen der Benutzer das Haushaltsgerät steuern kann. Für das Beispiel einer Haushalts-Geschirrspülmaschine als Haushaltsgerät kann der Benutzer über die Bedien-Knebel vorbestimmte Programme oder Spülprogramme auswählen.

Allerdings wird ein Haushaltsgerät herkömmlicherweise von einer Vielzahl von Benutzern, beispielsweise von den Mitgliedern einer Familie, genutzt. Die Benutzerschnittstelle ist für die unterschiedlichen Benutzer, beispielsweise die Mitglieder einer Familie, unterschiedlich intuitiv. Des Weiteren wenden die unterschiedlichen Benutzer ein Haushaltsgerät auch unterschiedlich an. Beispielsweise wählt ein Benutzer vorrangig ein Eco-Programm einer Geschirrspülmaschine, wohingegen die anderen Benutzer dieses Eco-Programm selten oder gar nicht benutzen.

Somit ist die Bedienung des Haushaltsgeräts mittels der einen Benutzerschnittstelle für die verschiedenen Benutzer nicht nur unterschiedlich intuitiv, sondern auch unterschiedlich aufwendig und aufgrund dessen auch unterschiedlich fehleranfällig.

Die US 2007/271512 A1 offenbart ein Verfahren zum Personalisieren der Benutzerschnittstelle eines Geräts durch Erzeugen einer benutzerspezifischen Schnittstelle basierend auf den identifizierten biometrischen Merkmalen eines Benutzers.

Vor diesem Hintergrund besteht eine Aufgabe der vorliegenden Erfindung darin, den Betrieb eines Haushaltsgeräts mit einer Benutzerschnittstelle zur Bedienung des Haushaltsgeräts durch eine Mehrzahl von Benutzern zu verbessern.

Gemäß einem ersten Aspekt wird ein Verfahren zum Betreiben eines Haushaltsgeräts mit einer Benutzerschnittstelle zur Bedienung des Haushaltsgeräts durch eine Mehrzahl von Benutzern vorgeschlagen. Das Verfahren umfasst die folgenden Schritte a) und b):
a) benutzerspezifisches Erfassen einer Anzahl von vorbestimmten Benutzungs-Handlungen eines jeweiligen Benutzers der Mehrzahl von Benutzern beim Bedienen des Haushaltsgeräts, und
b) Bereitstellen einer benutzerspezifischen Bedienoberfläche durch die Benutzerschnittstelle für den jeweiligen Benutzer in Abhängigkeit der benutzerspezifisch erfassten Benutzungs-Handlungen des jeweiligen Benutzers.

Durch die Bereitstellung einer benutzerspezifischen Bedienoberfläche für den jeweiligen Benutzer des Haushaltsgeräts kann die Wahrscheinlichkeit einer Fehlbedienung durch den jeweiligen Benutzer verringert werden. Hierzu im Detail: Wenn die Bedienoberfläche in Abhängigkeit der jeweiligen benutzerspezifischen Benutzungs-Handlungen für den jeweiligen Benutzer angepasst wird, so ist die Bedienoberfläche für den jeweiligen Benutzer intuitiver und für seine beispielsweise häufigsten Benutzungs-Handlungen angepasst. Beispielsweise kann die Bedienoberfläche derart angepasst werden, dass eine häufige Benutzungs-Handlung eines bestimmten Benutzers durch die Bedienoberfläche priorisiert, beispielsweise in einem Bedienmenü höher hierarchisch oder farblich oder graphisch abgesetzt dargestellt wird. Durch die Verringerung der Wahrscheinlichkeit von Fehlbedienungen durch die Benutzer wird der Betrieb des Haushaltsgeräts auch hinsichtlich Effizienz, beispielsweise Energieverbrauch, verbessert.

Beispielsweise ist es möglich, über die angepasste Bedienoberfläche dem Benutzer spezielle Lieblingsprogramme priorisiert oder höher hierarchisch anzubieten, vorausgewählte Programme anzupassen oder auch individuelle Ansprachen des Benutzers durch die Bedienoberfläche visuell und/oder akustisch auszugeben. Auch ist es möglich, bei der benutzerspezifischen Bedienoberfläche eine bestimmte Sprache einer Mehrzahl voreingestellter Sprachen, insbesondere bei einem mehrsprachigen Haushalt, anzubieten. Des Weiteren ist es vorteilhafterweise möglich, über die benutzerspezifische Bedienoberfläche dem jeweiligen Benutzer benutzerspezifisch Tipps und Tricks bei der Bedienung des Haushaltsgeräts anzubieten. Des Weiteren ist es über die benutzerspezifische Bedienoberfläche möglich, den Benutzer bei möglichen Fehlbedienungen aufzuklären.

Ferner ist es in Abhängigkeit der benutzerspezifisch erfassten Benutzungs-Handlungen möglich, die Steuerung über die Bedienoberfläche derart anzupassen, dass besondere Programme und/oder Einstellungsmöglichkeiten des Haushaltsgeräts freigeschaltet werden, bestimmte Software-Updates bereitgestellt werden oder bestimmte Geräte-Checks des Haushaltsgeräts, beispielsweise ein Diagnoseprogramm, durchgeführt werden.

Die Benutzerschnittstelle des Haushaltsgeräts umfasst beispielsweise als Bedienoberfläche einen berührungssensitiven Bildschirm. Der berührungssensitive Bildschirm kann eine Anzahl oder Mehrzahl von Bedienelementen, beispielsweise virtuellen Bedientasten, umfassen. Des Weiteren kann der berührungssensitive Bildschirm eine Anzahl von Aufklappmenüs und Anzeigebereiche umfassen. Ferner kann die Benutzerschnittstelle auch haptische Bedien-Knebel oder dergleichen umfassen.

Gemäß einer Ausführungsform weist die Bedienoberfläche der Benutzerschnittstelle eine Anzahl von Bedienelementen auf, wobei einem jeden der Bedienelemente zumindest eine Funktion des Haushaltsgeräts zugeordnet ist. Dabei wird in Schritt a) eine benutzerspezifische Betätigungs-Erfassung durchgeführt, bei welcher erfasst wird, welches Bedienelement oder welche Bedienelemente der jeweilige Benutzer über eine vorbestimmte Zeitdauer und/oder über eine bestimmte Folge von Bedienungen betätigt.

Wenn beispielsweise bei der Betätigungs-Erfassung festgestellt wird, dass ein bestimmter Benutzer eines der Bedienelemente besonders häufig nutzt, so kann dieses durch die Bedienoberfläche priorisiert und/oder höher hierarchisch in einem Menü dargestellt werden. Der vorteilhafte Effekt liegt hier darin, dass dieser bestimmte Benutzer sein Lieblings-Bedienelement schneller und damit mit einer geringeren Wahrscheinlichkeit einer Fehlbedienung nutzen kann.

Gemäß einer weiteren Ausführungsform wird in Schritt b) eine Darstellungs-Art des jeweiligen Bedienelements auf der Bedienoberfläche in Abhängigkeit der benutzerspezifischen Betätigungs-Erfassung für den jeweiligen Benutzer benutzerspezifisch angepasst.

Vorteilhafterweise kann die Darstellungs-Art eines Bedienelements benutzerspezifisch durch die Bedienoberfläche angepasst werden. Wenn beispielsweise ein bestimmtes Bedienelement von einem bestimmten Benutzer besonders häufig genutzt wird, so kann dieses Bedienelement auf der Bedienoberfläche beispielsweise farblich hervorgesetzt oder größer dargestellt werden.

Gemäß einer weiteren Ausführungsform umfassen die vorbestimmten Benutzungs-Handlungen zumindest eine Bedien-Eingabe des Benutzers zum Steuern des Haushaltsgeräts. Erfindungsgemäß umfassen die vorbestimmten Benutzungs-Handlungen zumindest eine Wartungs-Handlung des Benutzers zum Warten des Haushaltsgeräts, zumindest eine Belade-Handlung des Benutzers zum Beladen des Haushaltsgeräts und/oder zumindest eine Entlade-Handlung des Benutzers zum Entladen des Haushaltsgeräts.

Gemäß einer weiteren Ausführungsform wird die Bedien-Eingabe des Benutzers zum Steuern des Haushaltsgeräts durch ein Betätigen eines Bedienelements der Benutzerschnittstelle, durch eine Eingabe eines Sprachbefehls in eine Spracherkennung der Benutzerschnittstelle und/oder durch eine Eingabe eines Gestenbefehls in eine Gestenerkennung der Benutzerschnittstelle ausgebildet.

Gemäß einer weiteren Ausführungsform ist die Bedien-Eingabe des Benutzers als eine haptische Eingabe, als eine Sprach-Eingabe und/oder als eine Gesten-Eingabe mittels einer Fernbedienung ausgebildet.

Beispielsweise kann der Benutzer über eine auf seinem Smartphone installierte App einen Sprachbefehl eingeben, welcher über ein Netzwerk, beispielsweise das Internet, an das Haushaltsgerät übertragen wird. Die Benutzerschnittstelle des Haushaltsgerätes umfasst hierzu vorzugsweise eine Übertragungseinheit, welche mit der App über das Netzwerk koppelbar ist.

Gemäß einer weiteren Ausführungsform umfasst die zumindest eine Wartungs-Handlung ein Nachfüllen von Salz, ein Nachfüllen von Klarspüler und/oder ein Reinigen eines Filters des Haushaltsgeräts.

Das Nachfüllen von Salz kann beispielsweise durch einen Füllstandsensor detektiert werden. Ebenso kann das Nachfüllen von Klarspüler durch einen anderen Füllstandsensor detektiert werden. Die Reinigung des Filters kann beispielsweise über eine Änderung von Durchflussraten oder eine Leistungsaufnahme einer Pumpe, beispielsweise der Umwälzpumpe einer Geschirrspülmaschine, detektiert werden.

Die Wartungshandlung kann auch als ein Start eines Maschinenreinigungsprogramms ausgebildet sein. Beispielsweise kann der Benutzer durch eine Anzeige, beispielsweise nach 30 Spülzyklen, an den Start des Maschinenreinigungsprogramms erinnert werden.

Gemäß einer weiteren Ausführungsform wird in Schritt a) eine benutzerspezifische Programmauswahl-Erfassung durchgeführt, bei welcher erfasst wird, welches Programm oder welche Programme der jeweilige Benutzer aus einer Mehrzahl vorbestimmter Programme zum Steuern des Haushaltsgeräts mittels der Bedien-Eingaben über eine vorbestimmte Zeitdauer und/oder über eine bestimmte Folge von Bedienungen auswählt.

Gemäß einer weiteren Ausführungsform wird zumindest ein Bedienelement der Bedienoberfläche, welches einem oder mehreren der vorbestimmten Programme zugeordnet ist, in Abhängigkeit der benutzerspezifischen Programmauswahl-Erfassung für den jeweiligen Benutzer benutzerspezifisch angepasst.

Erfindungsgemäß wird in Schritt a) eine benutzerspezifische Wartungs-Erfassung durchgeführt, bei welcher erfasst wird, welche Wartungs-Handlungen der jeweilige Benutzer aus einer Mehrzahl vorbestimmter Wartungs-Handlungen zum Warten des Haushaltsgeräts über eine vorbestimmte Zeitdauer und/oder über eine bestimmte Folge von Bedienungen tätigt.

In Abhängigkeit der Wartungs-Erfassung kann beispielsweise die Bedienoberfläche derart angepasst werden, dass dem jeweiligen Benutzer bestimmte Hinweise oder Empfehlungen für die Wartung des Haushaltsgeräts ausgegeben werden.

Erfindungsgemäß wird in Schritt a) zusätzlich oder alternativ zur benutzerspezifischen Wartungs-Erfassung eine benutzerspezifische Lade-Erfassung durchgeführt, bei welcher erfasst wird, welche Belade-Handlungen und/oder Entlade-Handlungen der jeweilige Benutzer über eine vorbestimmte Zeitdauer und/oder über eine bestimmte Folge von Bedienungen tätigt.

Das Beladen und Entladen des Haushaltsgeräts kann beispielsweise über Gewichtssensoren detektiert werden. Für das Beispiel einer Geschirrspülmaschine als Haushaltsgerät können die Gewichtssensoren beispielsweise in den Schienen des Oberkorbs und/oder des Unterkorbs der Geschirrspülmaschine vorgesehen sein. Ferner kann das Beladen und Entladen der Geschirrspülmaschine auch über den Türöffnungszeitpunkt der Tür der Geschirrspülmaschine detektiert werden.

Gemäß einer weiteren Ausführungsform können die Programmauswahl-Erfassung, die Wartungs-Erfassung und die Lade-Erfassung benutzerspezifisch kombiniert werden, um die Bedienoberfläche für den Benutzer entsprechend anzupassen.

Erfindungsgemäß wird zumindest eine Anzeige in einem Anzeigebereich der Bedienoberfläche in Abhängigkeit der benutzerspezifischen Wartungs-Erfassung und/oder in Abhängigkeit der benutzerspezifischen Lade-Erfassung für den jeweiligen Benutzer benutzerspezifisch angepasst.

Über die Anzeige in dem Anzeigebereich der Bedienoberfläche können dem Benutzer benutzerspezifische Hinweise und Empfehlungen beim Umgang mit dem Haushaltsgerät gegeben werden.

Gemäß einer weiteren Ausführungsform wird zumindest eine Anzeige in einem Anzeigebereich der Bedienoberfläche in Abhängigkeit einer für einen ersten Benutzer spezifischen Wartungs-Erfassung und/oder in Abhängigkeit einer für den ersten Benutzer spezifischen benutzerspezifischen Lade-Erfassung für einen zweiten Benutzer benutzerspezifisch angepasst.

Wenn beispielsweise der erste Benutzer für einen vorbestimmten, beispielsweise längeren, Zeitraum stets alle Wartungen durchführt, so kann mittels der Anzeige für den zweiten Benutzer dieser daran erinnert werden, auch einmal eine Wartungshandlung vorzunehmen.

Gemäß einer weiteren Ausführungsform wird der jeweilige Benutzer aus der Mehrzahl von Benutzern mittels einer Eingabe einer vorbestimmten Tastenkombination an der Benutzerschnittstelle, mittels einer Zuordnung zu einem die Benutzerschnittstelle aufweisenden Endgerät des Benutzers, mittels einer Spracheingabe zur Eingabe einer Identifikation des jeweiligen Benutzers, mittels einer Sprechererkennung zur Identifikation des Benutzers, mittels einer Gesichts-Erkennung des jeweiligen Benutzers, mittels einer Fingerabdruck-Erkennung des jeweiligen Benutzers, mittels einer Hand-Erkennung des jeweiligen Benutzers, mittels einer Gesten-Erkennung des jeweiligen Benutzers und/oder mittels einer dem jeweiligen Benutzer zugeordneten RFID-Identifikation erkannt.

Beispielsweise kann der jeweilige Benutzer über sein Smartphone aktiv oder passiv erkannt werden. Bei einer passiven Erkennung des Nutzers über Smartphone wird beispielsweise Bluetooth oder NFC (NFC; Near Field Communication) eingesetzt.

Gemäß einem zweiten Aspekt wird ein Computerprogrammprodukt vorgeschlagen, welches auf einer programmgesteuerten Einrichtung die Durchführung des Verfahrens gemäß dem ersten Aspekt oder einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Haushaltsgerät vorgeschlagen, welches umfasst: eine Benutzerschnittstelle zur Bedienung des Haushaltsgeräts durch eine Mehrzahl von Benutzern, eine erste Einheit zum benutzerspezifischen Erfassen einer Anzahl von vorbestimmten Benutzungs-Handlungen eines jeweiligen Benutzers der Mehrzahl von Benutzern beim Bedienen des Haushaltsgeräts, wobei die vorbestimmten Benutzungs-Handlungen zumindest eine Wartungs-Handlung des Benutzers zum Warten des Haushaltsgeräts, zumindest eine Belade-Handlung des Benutzers zum Beladen des Haushaltsgeräts und/oder zumindest eine Entlade-Handlung des Benutzers zum Entladen des Haushaltsgeräts umfassen und wobei bei einer benutzerspezifischen Wartungs-Erfassung erfasst wird, welche Wartungs-Handlungen der jeweilige Benutzer aus einer Mehrzahl vorbestimmter Wartungs-Handlungen zum Warten des Haushaltsgeräts über eine vorbestimmte Zeitdauer und/oder über eine bestimmte Folge von Bedienungen tätigt, und/oder bei einer benutzerspezifischen Lade-Erfassung erfasst wird, welche Belade-Handlungen und/oder Entlade-Handlungen der jeweilige Benutzer über eine vorbestimmte Zeitdauer und/oder über eine bestimmte Folge von Bedienungen tätigt, eine zweite Einheit zum Ansteuern der Benutzer-Schnittstelle in Abhängigkeit der benutzerspezifisch erfassten Benutzungs-Handlungen des jeweiligen Benutzers derart, dass diese eine jeweilige benutzerspezifische Bedienoberfläche für den jeweiligen Benutzer bereitstellt, und zumindest eine Anzeige in einem Anzeigebereich der Bedienoberfläche, die in Abhängigkeit der benutzerspezifischen Wartungs-Erfassung und/oder in Abhängigkeit der benutzerspezifischen Lade-Erfassung für den jeweiligen Benutzer benutzerspezifisch angepasst wird.

Das Haushaltsgerät ist beispielsweise als eine Geschirrspülmaschine, als ein Gargerät, als ein Kältegerät, als eine Waschmaschine oder als eine Kaffeemaschine ausgebildet. Das Gargerät ist beispielsweise ein Backofen, eine Mikrowelle, ein Herd oder ein Dampfgarer. Das Kältegerät ist zum Beispiel ein Kühlschrank.

Die jeweilige Einheit, insbesondere die erste Einheit oder die die zweite Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für das vorgeschlagene Haushaltsgerät entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockschaltbild eines Verfahrens zum Betreiben eines Haushaltsgeräts;
Fig. 2 zeigt ein schematisches Blockschaltbild eines ersten Ausführungsbeispiels eines Haushaltsgeräts; und
Fig. 3 zeigt eine schematische perspektivische Ansicht eines zweiten Ausführungsbeispiels eines Haushaltsgeräts.

In den Figuren sind gleiche oder funktionsgleiche Elemente mit denselben Bezugszeichen versehen worden, sofern nichts anderes angegeben ist.

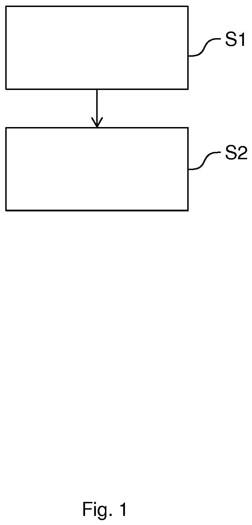

In Fig. 1 ist ein schematisches Blockschaltbild eines Verfahrens zum Betreiben eines Haushaltsgeräts 1 dargestellt.

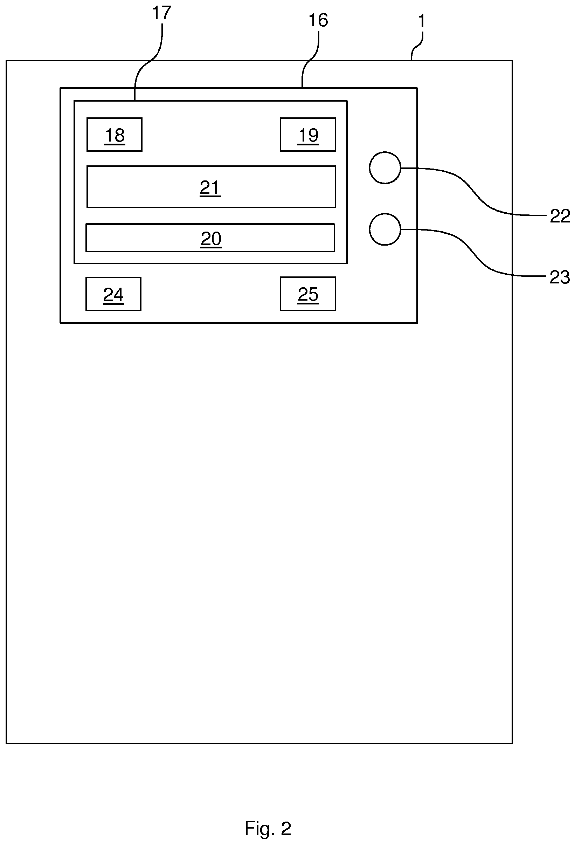

Das Verfahren der Fig. 1 wird unter Bezugnahme zur Fig. 2 näher erläutert, welche ein schematisches Blockschaltbild eines ersten Ausführungsbeispiels eines Haushaltsgeräts 1 zeigt. Das Haushaltsgerät 1 der Fig. 2 ist beispielsweise eine Haushalts-Geschirrspülmaschine, ein Gargerät, wie zum Beispiel ein Backofen, ein Kältegerät, wie zum Beispiel ein Kühlschrank, eine Waschmaschine oder eine Kaffeemaschine. Das Haushaltsgerät 1 der Fig. 2 umfasst mitunter eine Benutzerschnittstelle 16, welche zur Bedienung des Haushaltsgeräts 1 durch eine Mehrzahl von Benutzern eingerichtet ist. Die Benutzerschnittstelle 16 umfasst eine Bedienoberfläche 17, welche beispielsweise als berührungssensitiver Bildschirm ausgebildet ist. Die Bedienoberfläche 17 umfasst Bedienelemente 18, 19, ein Aufklappmenü 20 und einen Anzeigebereich 21. Ohne Einschränkung der Allgemeinheit hat die Bedienoberfläche 17 der Fig. 2 zwei Bedienelemente 18 und 19, welche beispielsweise als virtuelle Bedientasten auf der Bedienoberfläche 17 ausgebildet sind. Neben der Bedienoberfläche 17 kann die Benutzerschnittstelle 16 auch Bedien-Knebel 22, 23 umfassen.

Zurückkommend zu Fig. 1 umfasst das Ausführungsbeispiel des Verfahrens der Fig. 1 die folgenden Verfahrensschritte S1 und S2:
In Schritt S1 wird benutzerspezifisch eine Anzahl von vorbestimmten Benutzungs-Handlungen eines jeweiligen Benutzers der Mehrzahl von Benutzern beim Bedienen des Haushaltsgeräts 1 erfasst. Mit anderen Worten werden die Benutzungs-Handlungen des jeweiligen Benutzers, differenziert nach dem jeweiligen Benutzer, bei der Bedienung des Haushaltsgeräts erfasst.

In Schritt S2 wird die Bedienoberfläche 17 durch die Benutzerschnittstelle 16 für den jeweiligen Benutzer in Abhängigkeit der benutzerspezifisch erfassten Benutzungs-Handlungen benutzerspezifisch bereitgestellt. Mit anderen Worten wird für den jeweiligen Benutzer die Bedienoberfläche 17 der Benutzerschnittstelle 16 angepasst. Diese Anpassung erfolgt in Abhängigkeit der von dem Benutzer getätigten Benutzungs-Handlungen bei der Bedienung des Haushaltsgeräts 1.

Mit Bezug zur Fig. 2 ist vorzugsweise einem jeden der Bedienelemente 18, 19 zumindest eine Funktion des Haushaltsgeräts 1 zugeordnet. Dann kann in dem Schritt S1 eine benutzerspezifische Betätigungs-Erfassung durchgeführt werden, bei welcher erfasst wird, welches Bedienelement 18, 19 oder welche Bedienelemente 18, 19 der jeweilige Benutzer über eine vorbestimmte Zeitdauer und/oder über eine bestimmte Folge von Bedienungen betätigt.

Des Weiteren kann in Schritt S2 eine Darstellungs-Art des jeweiligen Bedienelements 18, 19 auf der Bedienoberfläche 17 in Abhängigkeit der benutzerspezifischen Betätigungs-Erfassung für den jeweiligen Benutzer benutzerspezifisch angepasst werden. Wenn beispielsweise bei der Betätigungs-Erfassung festgestellt wird, dass ein bestimmter Benutzer immer nur oder fast ausschließlich das Bedienelement 19 betätigt, aber entsprechend selten das Bedienelement 18, so kann bei der Anpassung der Darstellungs-Art das Bedienelement 19 für diesen Benutzer größer und/oder farblich abgesetzter dargestellt werden als das Bedienelement 18.

Die in Schritt S1 erfassten Benutzungs-Handlungen umfassen zumindest eine Wartungs-Handlung des Benutzers zum Warten des Haushaltsgeräts 1, zumindest eine Belade-Handlung des Benutzers zum Beladen des Haushaltsgeräts 1 und/oder zumindest eine Entlade-Handlung des Benutzers zum Entladen des Haushaltsgeräts 1. Zusätzlich zu diesen Handlungen können die in Schritt 1 erfassten Benutzungs-Handlungen zumindest eine Bedien-Eingabe des Benutzers zum Steuern des Haushaltgeräts 1 umfassen.

Die Bedien-Eingabe des Benutzers zum Steuern des Haushaltsgeräts 1 ist beispielsweise durch ein Betätigen eines der Bedienelemente 18, 19 der Benutzerschnittstelle 16, durch eine Eingabe eines Sprachbefehls in eine Spracherkennung (nicht gezeigt) der Benutzerschnittstelle 16 und/oder durch eine Eingabe eines Gestenbefehls in eine Gestenerkennung (nicht gezeigt) der Benutzerschnittstelle 16 ausgebildet.

Für das Beispiel einer Geschirrspülmaschine als Haushaltsgerät 1 kann die zumindest eine Wartungs-Handlung ein Nachfüllen von Salz, ein Nachfüllen von Klarspüler und/oder ein Reinigen eines Filters der Geschirrspülmaschine umfassen.

Des Weiteren kann in Schritt S1 eine benutzerspezifische Programmauswahl-Erfassung durchgeführt werden, bei welcher erfasst wird, welches Programm oder welche Programme der jeweilige Benutzer aus einer Mehrzahl vorbestimmter Programme zum Steuern des Haushaltsgeräts 1 mittels der Bedien-Eingabe über eine vorbestimmte Zeitdauer und/oder über eine bestimmte Folge von Bedienungen auswählt. Die vorbestimmte Zeitdauer kann beispielsweise einige Tage, einige Wochen, aber auch einige Monate umfassen. Die bestimmte Folge von Bedienungen kann beispielsweise eine Folge von 10, 20 oder 50 Bedienungen umfassen. Des Weiteren kann ein Bedienelement 18, 19 der Bedienoberfläche 17, welches einem oder mehreren der vorbestimmten Programme des Haushaltsgeräts 1 zugeordnet ist, in Abhängigkeit der benutzerspezifischen Programmauswahl-Erfassung für den jeweiligen Benutzer benutzerspezifisch angepasst werden.

Ferner kann in Schritt S1 eine benutzerspezifische Wartungs-Erfassung durchgeführt werden, bei welcher erfasst wird, welche Wartungs-Handlungen der jeweilige Benutzer aus einer Mehrzahl vorbestimmter Wartungs-Handlungen zum Warten des Haushaltsgeräts 1 über eine vorbestimmte Zeitdauer und/oder über eine bestimmte Folge von Bedienungen tätigt.

Ferner ist es möglich, in Schritt S1 eine benutzerspezifische Lade-Erfassung durchzuführen, bei welcher wiederum erfasst wird, welche Belade-Handlungen und/oder Entlade-Handlungen der jeweilige Benutzer über eine vorbestimmte Zeitdauer und/oder über eine bestimmte Folge von Bedienungen tätigt. Für das Beispiel einer Geschirrspülmaschine als Haushaltsgerät 1 kann eine Belade-Handlung beispielsweise umfassen, an welcher Stelle der Benutzer ein bestimmtes Spülgut vorzugsweise ablegt. Die Entlade-Handlungen können hier beispielsweise umfassen, in welcher Reihenfolge und/oder in welcher Zeit der jeweilige Benutzer die Geschirrspülmaschine 1 entlädt.

In Abhängigkeit der benutzerspezifischen Wartungs-Erfassung und/oder in Abhängigkeit der benutzerspezifischen Lade-Erfassung kann eine Anzeige in dem Anzeigebereich 21 der Bedienoberfläche 17 angepasst werden. Beispielsweise kann die Anzeige bestimmte Hinweise und Empfehlungen für die Wartung, das Laden und/oder das Entladen des Haushaltsgeräts 1 umfassen.

Vor der Durchführung des Schrittes S1 wird der jeweilige Benutzer vorzugsweise aus der Mehrzahl von Benutzern erkannt. Für diese Benutzererkennung kann beispielsweise eine Eingabe einer vorbestimmten Tastenkombination an der Benutzerschnittstelle 16, eine Zuordnung zu einem die Benutzerschnittstelle 16 aufweisenden Endgerät (zum Beispiel ein Smartphone) des Benutzers, eine Spracheeingabe zur Eingabe einer Identifikation des Benutzers, eine Sprecher-Erkennung zur Identifikation des Benutzers, eine Gesichts-Erkennung des Benutzers, eine Fingerabdruck-Erkennung des Benutzers, eine Hand-Erkennung des Benutzers, eine Gesten-Erkennung des Benutzers und/oder eine RFID-Identifikation des Benutzers eingesetzt werden.

Wie oben ausgeführt, zeigt die Fig. 2 ein schematisches Blockschaltbild eines Haushaltsgeräts 1. Neben den oben erläuterten Merkmalen umfasst die Benutzerschnittstelle 16 des Haushaltsgeräts 1 der Fig. 2 ein erste Einheit 24 und eine zweite Einheit 25. Die erste Einheit 24 ist dazu eingerichtet, benutzerspezifisch eine Anzahl von vorbestimmten Benutzungs-Handlungen des jeweiligen Benutzers bei der Bedienung des Haushaltsgeräts 1 zu erfassen. Die zweite Einheit 25 ist dazu eingerichtet, die Benutzerschnittstelle 16 in Abhängigkeit der benutzerspezifisch erfassten Benutzungs-Handlungen derart anzusteuern, dass die Benutzerschnittstelle 16 die Bedienoberfläche 17 benutzerspezifisch anpasst.

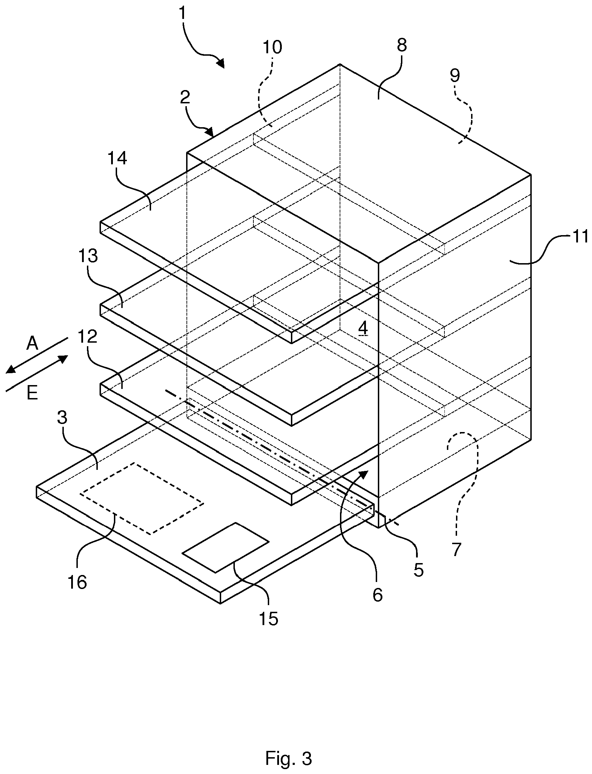

Die Fig. 3 zeigt eine schematische perspektivische Ansicht eines zweiten Ausführungsbeispiels eines Haushaltsgeräts 1. In Fig. 3 ist das Haushaltsgerät 1 als Haushalts-Geschirrspülmaschine ausgebildet. Die Haushalts-Geschirrspülmaschine 1 umfasst einen Spülbehälter 2, der durch eine Tür 3, insbesondere wasserdicht verschließbar ist. Hierzu kann zwischen der Tür und dem Spülbehälter 2 eine Dichteinrichtung vorgesehen sein. Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können eine Spülkammer 4 zum Spülen von Spülgut bilden.

Die Tür 3 ist in der Fig. 3 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

An der Tür 3 ist eine Steuerungsvorrichtung 15 angeordnet. Die Steuerungsvorrichtung 15 ist zum Steuern der Haushalts-Geschirrspülmaschine 1, insbesondere zur Durchführung von Spülprogrammen eingerichtet. Hierzu steuert die Steuerungsvorrichtung 15 verschiedene, hier nicht dargestellte Einheiten der Haushalts-Geschirrspülmaschine 1, wie beispielsweise Ventile, eine Pumpe und/oder eine Heizwendel, entsprechend den Vorgaben eines ausgewählten Spülprogramms.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar und entgegen der Einschubrichtung E in einer Auszugsrichtung A aus dem Spülbehälter 2 herausziehbar.

Die Haushalts-Geschirrspülmaschine 1 weist ferner eine Benutzerschnittstelle 16 zur Bedienung der Haushalts-Geschirrspülmaschine 1 durch eine Mehrzahl von Benutzern auf.

Die Benutzerschnittstelle 16 der Haushalts-Geschirrspülmaschine 1 ist beispielsweise wie in Fig. 2 dargestellt und wie zur Fig. 2 beschrieben ausgebildet.

Obwohl die vorliegende Erfindung anhand von Ausführungsbeispielen beschrieben wurde, ist sie vielfältig modifizierbar.

### Verwendete Bezugszeichen:

- 1: Haushaltsgerät
- 2: Spülbehälter
- 3: Tür
- 4: Innenraum
- 5: Schwenkachse
- 6: Beschickungsöffnung
- 7: Boden
- 8: Deckel
- 9: Rückwand
- 10: Seitenwand
- 11: Seitenwand
- 12: Spülgutaufnahme
- 13: Spülgutaufnahme
- 14: Spülgutaufnahme
- 15: Steuerungsvorrichtung
- 16: Benutzerschnittstelle
- 17: Bedienoberfläche
- 18: Bedienelement
- 19: Bedienelement
- 20: Aufklappmenü
- 21: Anzeigebereich
- 22: Bedien-Knebel
- 23: Bedien-Knebel
- 24: erste Einheit
- 25: zweite Einheit
- S1: Verfahrensschritt
- S2: Verfahrensschritt

## Patentansprüche

1. Verfahren zum Betreiben eines Haushaltsgeräts (1) mit einer Benutzerschnittstelle (16) zur Bedienung des Haushaltsgeräts (1) durch eine Mehrzahl von Benutzern, mit
a) benutzerspezifisches Erfassen (S1) einer Anzahl von vorbestimmten Benutzungs-Handlungen eines jeweiligen Benutzers der Mehrzahl von Benutzern beim Bedienen des Haushaltsgeräts (1), wobei die vorbestimmten Benutzungs-Handlungen zumindest eine Wartungs-Handlung des Benutzers zum Warten des Haushaltsgeräts (1), zumindest eine Belade-Handlung des Benutzers zum Beladen des Haushaltsgeräts (1) und/oder zumindest eine Entlade-Handlung des Benutzers zum Entladen des Haushaltsgeräts (1) umfassen, und
b) Bereitstellen (S2) einer benutzerspezifischen Bedienoberfläche (17) durch die Benutzerschnittstelle (16) für den jeweiligen Benutzer in Abhängigkeit der benutzerspezifisch erfassten Benutzungs-Handlungen des jeweiligen Benutzers,
wobei in Schritt a) eine benutzerspezifische Wartungs-Erfassung durchgeführt wird, bei welcher erfasst wird, welche Wartungs-Handlungen der jeweilige Benutzer aus einer Mehrzahl vorbestimmter Wartungs-Handlungen zum Warten des Haushaltsgeräts (1) über eine vorbestimmte Zeitdauer und/oder über eine bestimmte Folge von Bedienungen tätigt, und/oder in Schritt a) eine benutzerspezifische Lade-Erfassung durchgeführt wird, bei welcher erfasst wird, welche Belade-Handlungen und/oder Entlade-Handlungen der jeweilige Benutzer über eine vorbestimmte Zeitdauer und/oder über eine bestimmte Folge von Bedienungen tätigt, und weiterhin zumindest eine Anzeige in einem Anzeigebereich (21) der Bedienoberfläche (17) in Abhängigkeit der benutzerspezifischen Wartungs-Erfassung und/oder in Abhängigkeit der benutzerspezifischen Lade-Erfassung für den jeweiligen Benutzer benutzerspezifisch angepasst wird.

2. Verfahren nach Anspruch 1, **dadurch gekennzeichnet, dass** die Bedienoberfläche (17) der Benutzerschnittstelle (16) eine Anzahl von Bedienelementen (18, 19) aufweist, wobei einem jeden der Bedienelemente (18, 19) zumindest eine Funktion des Haushaltsgeräts (1) zugeordnet ist, wobei in Schritt a) eine benutzerspezifische Betätigungs-Erfassung durchgeführt wird, bei welcher erfasst wird, welches Bedienelement (18, 19) oder welche Bedienelemente (18, 19) der jeweilige Benutzer über eine vorbestimmte Zeitdauer und/oder über eine bestimmte Folge von Bedienungen betätigt.

3. Verfahren nach Anspruch 2, **dadurch gekennzeichnet, dass** in Schritt b) eine Darstellungs-Art des jeweiligen Bedienelements (18, 19) auf der Bedienoberfläche (17) in Abhängigkeit der benutzerspezifischen Betätigungs-Erfassung für den jeweiligen Benutzer benutzerspezifisch angepasst wird.

4. Verfahren nach einem der Ansprüche 1 bis 3, **dadurch gekennzeichnet, dass** die vorbestimmten Benutzungs-Handlungen ferner eine Bedien-Eingabe des Benutzers zum Steuern des Haushaltsgeräts (1) umfassen, wobei die Bedien-Eingabe des Benutzers durch ein Betätigen eines Bedienelements (18, 19) der Benutzerschnittstelle (16), durch eine Eingabe eines Sprachbefehls in eine Spracherkennung der Benutzerschnittstelle (16) und/oder durch eine Eingabe eines Gestenbefehls in eine Gestenerkennung der Benutzerschnittstelle (16) ausgebildet wird.

5. Verfahren nach einem der Ansprüche 1 bis 4, **dadurch gekennzeichnet, dass** die zumindest eine Wartungs-Handlung ein Nachfüllen von Salz, ein Nachfüllen von Klarspüler und/oder ein Reinigen eines Filters des Haushaltsgeräts (1) umfasst.

6. Verfahren nach Anspruch 4, **dadurch gekennzeichnet, dass** in Schritt a) eine benutzerspezifische Programmauswahl-Erfassung durchgeführt wird, bei welcher erfasst wird, welches Programm oder welche Programme der jeweilige Benutzer aus einer Mehrzahl vorbestimmter Programme zum Steuern des Haushaltsgeräts (1) mittels der Bedien-Eingaben über eine vorbestimmte Zeitdauer und/oder über eine bestimmte Folge von Bedienungen auswählt.

7. Verfahren nach Anspruch 6, **dadurch gekennzeichnet, dass** zumindest ein Bedienelement (18, 19) der Bedienoberfläche (17), welches einem oder mehreren der vorbestimmten Programme zugeordnet ist, in Abhängigkeit der benutzerspezifischen Programmauswahl-Erfassung für den jeweiligen Benutzer benutzerspezifisch angepasst wird.

8. Verfahren nach einem der Ansprüche 1 bis 7, **dadurch gekennzeichnet, dass** der jeweilige Benutzer aus der Mehrzahl von Benutzern mittels einer Eingabe einer vorbestimmten Tastenkombination an der Benutzerschnittstelle (16), mittels einer Zuordnung zu einem die Benutzerschnittstelle (16) aufweisenden Endgerät des Benutzers, mittels einer Spracheingabe zur Eingabe einer Identifikation des jeweiligen Benutzers, mittels einer Sprechererkennung zur Identifikation des jeweiligen Benutzers, mittels einer Gesichts-Erkennung des jeweiligen Benutzers, mittels einer Fingerabdruck-Erkennung des jeweiligen Benutzers, mittels einer Hand-Erkennung des jeweiligen Benutzers, mittels einer Gesten-Erkennung des jeweiligen Benutzers und/oder mittels einer dem jeweiligen Benutzer zugeordneten RFID-Identifikation erkannt wird.

9. Haushaltsgerät (1) mit
• einer Benutzerschnittstelle (16) zur Bedienung des Haushaltsgeräts (1) durch eine Mehrzahl von Benutzern,
• einer ersten Einheit (24) zum benutzerspezifischen Erfassen einer Anzahl von vorbestimmten Benutzungs-Handlungen eines jeweiligen Benutzers der Mehrzahl von Benutzern beim Bedienen des Haushaltsgeräts (1), wobei die vorbestimmten Benutzungs-Handlungen zumindest eine Wartungs-Handlung des Benutzers zum Warten des Haushaltsgeräts (1), zumindest eine Belade-Handlung des Benutzers zum Beladen des Haushaltsgeräts (1) und/oder zumindest eine Entlade-Handlung des Benutzers zum Entladen des Haushaltsgeräts (1) umfassen und wobei bei einer benutzerspezifischen Wartungs-Erfassung erfasst wird, welche Wartungs-Handlungen der jeweilige Benutzer aus einer Mehrzahl vorbestimmter Wartungs-Handlungen zum Warten des Haushaltsgeräts (1) über eine vorbestimmte Zeitdauer und/oder über eine bestimmte Folge von Bedienungen tätigt, und/oder bei einer benutzerspezifischen Lade-Erfassung erfasst wird, welche Belade-Handlungen und/oder Entlade-Handlungen der jeweilige Benutzer über eine vorbestimmte Zeitdauer und/oder über eine bestimmte Folge von Bedienungen tätigt,
• einer zweiten Einheit (25) zum Ansteuern der Benutzerschnittstelle (16) in Abhängigkeit der benutzerspezifisch erfassten Benutzungs-Handlungen des jeweiligen Benutzers derart, dass diese eine jeweilige benutzerspezifische Bedienoberfläche (17) für den jeweiligen Benutzer bereitstellt, und
• zumindest einer Anzeige in einem Anzeigebereich (21) der Bedienoberfläche (17), die in Abhängigkeit der benutzerspezifischen Wartungs-Erfassung und/oder in Abhängigkeit der benutzerspezifischen Lade-Erfassung für den jeweiligen Benutzer benutzerspezifisch angepasst wird.

10. Haushaltsgerät nach Anspruch 9, **dadurch gekennzeichnet, dass** das Haushaltsgerät (1) als eine Geschirrspülmaschine, als ein Gargerät, als ein Kältegerät, als eine Waschmaschine oder als eine Kaffeemaschine ausgebildet ist.

11. Computerprogrammprodukt, umfassend Befehle, die bewirken, dass das Haushaltsgerät nach einem der Ansprüche 9 oder 10 die Verfahrensschritte nach einem der Ansprüche 1-8 ausführt.

## Claims

1. Method for operating a household appliance (1) having a user interface (16) for the operation of the household appliance (1) by a plurality of users, said method comprising:
a) Register (S1) in a user-specific manner a number of predetermined usage actions of a particular user of the plurality of users when operating the household appliance (1), wherein the predetermined usage actions comprise at least one user servicing action for servicing the household appliance (1), at least one user loading action for loading the household appliance (1) and/or at least one user unloading action for unloading the household appliance (1), and
b) Provide (S2) a user-specific control surface (17) by way of the user interface (16) for the particular user on the basis of the usage actions of the particular user as registered in a user-specific manner,
wherein in step a) a procedure is performed so as to register a user-specific servicing, and during said procedure it is registered which servicing actions the particular user has performed from a plurality of predetermined servicing actions so as to service the household appliance (1) over a predetermined period and/or during a specific sequence of operating actions,
and/or in step a) a procedure is performed so as to register a user-specific loading, during which it is registered which loading actions and/or unloading actions the particular user has performed over a predetermined period and/or during a specific sequence of operating actions, and furthermore at least one display in a display region (21) of the control surface (17) is customised in a user-specific manner for the particular user on the basis of the registered user-specific servicing and/or on the basis of the registered user-specific loading.

2. Method according to claim 1, **characterised in that** the control surface (17) of the user interface (16) has a number of control elements (18, 19), wherein each one of the control elements (18, 19) is allocated at least one function of the household appliance (1), wherein in step a) a procedure is performed so as to register a user-specific actuation and during said procedure it is registered which control element (18, 19) or which control elements (18, 19) the particular user has actuated over a predetermined period and/or during a specific sequence of operating actions.

3. Method according to claim 2, **characterised in that** in step b) the type of display of the respective control element (18, 19) on the control surface (17) is customised in a user-specific manner for the particular user on the basis of the registered user-specific actuation.

4. Method according to one of claims 1 to 3, **characterised in that** the predetermined usage actions further comprise an operating input action of the user so as to control the household appliance (1), wherein the operating input action of the user is embodied by actuating a control element (18, 19) of the user interface (16), inputting a voice command into a voice recognition facility of the user interface (16) and/or inputting a gesture command into a gesture recognition facility of the user interface (16).

5. Method according to one of claims 1 to 4, **characterised in that** the at least one servicing action comprises topping up the salt, topping up the rinsing agent and/or cleaning a filter of the household appliance (1).

6. Method according to claim 4, **characterised in that** in step a) a procedure is performed so as to register a user-specific program selection and during said procedure it is registered which program or which programs the particular user selects from a plurality of predetermined programs so as to control the household appliance (1) by means of the operating input actions over a predetermined time period and/or during a specific sequence of operating actions.

7. Method according to claim 6, **characterised in that** at least one control element (18, 19) of the control surface (17) is customised in a user-specific manner for the particular user on the basis of the registered user-specific program selection, said control element being allocated to one or more of the predetermined programs.

8. Method according to one of claims 1 to 7, **characterised in that** the particular user is identified from the plurality of users by means of inputting a predetermined key combination on the user interface (16), by means of allocating the user to an end device that has the user interface (16), by means of a voice input for inputting an identification of the particular user, by means of a voice recognition facility for the identification of the particular user, by means of a facility for recognizing the face of the particular user, by means of a facility for recognizing a finger print of the particular user, by means of facility for recognizing a hand of the particular user, by means of a facility for recognizing a gesture of the particular user and/or by means of an RFID identification that is associated with the particular user.

9. Household appliance (1) having
• a user interface (16) for the operation of the household appliance (1) by a plurality of users,
• a first unit (24) for the user-specific registration of a number of predetermined usage actions of a particular user of the plurality of users when operating the household appliance (1), wherein the predetermined usage actions comprise at least one user servicing action for servicing the household appliance (1), at least one user loading action for loading the household appliance (1) and/or at least one user unloading action for unloading the household appliance (1), and wherein when a user-specific servicing is registered, it is registered which servicing actions the particular user has executed from a plurality of predetermined servicing actions so as to service the household appliance (1) over a predetermined period and/or during a specific sequence of operating actions, and/or when a user-specific loading is registered, it is registered which loading actions and/or unloading actions the particular user has executed over a predetermined period and/or during a specific sequence of operating actions,
• a second unit (25) for actuating the user interface (16) on the basis of the usage actions, of the particular user, registered in a user-specific manner, such that this provides a respective user-specific control surface (17) for the particular user, and
• at least one display in a display region (21) of the control surface (17) is customised in a user-specific manner for the particular user on the basis of the registered user-specific servicing and/or on the basis of the registered user-specific loading.

10. Household appliance according to claim 9, **characterised in that** the household appliance (1) is configured as a dishwasher, as a cooking appliance, as a refrigeration appliance, as a washing machine, or as a coffee machine.

11. Computer program product comprising commands which cause the household appliance as claimed in one of claims 9 or 10 to execute the method steps as claimed in one of claims 1 - 8.

## Revendications

1. Procédé de fonctionnement d'un appareil électroménager (1) comprenant une interface utilisateur (16) destinée à la commande de l'appareil électroménager (1) par une pluralité d'utilisateurs, le procédé comprenant :
a) la détection (S1) spécifique à l'utilisateur d'un certain nombre d'actions d'utilisation prédéfinies d'un utilisateur respectif de la pluralité des utilisateurs lors de la commande de l'appareil électroménager (1), dans lequel les actions d'utilisation prédéfinies comprennent au moins une action d'entretien de l'utilisateur pour entretenir l'appareil électroménager (1), au moins une action de chargement de l'utilisateur pour charger l'appareil électroménager (1) et/ou au moins une action de déchargement de l'utilisateur pour décharger l'appareil électroménager (1), et
b) fourniture (S2) d'une surface de commande (17) spécifique à l'utilisateur par l'intermédiaire de l'interface utilisateur (16) pour l'utilisateur respectif en fonction des actions d'utilisation de l'utilisateur respectif détectées spécifiquement de la part de l'utilisateur,
dans lequel, dans l'étape a), une détection d'entretien spécifique à l'utilisateur est effectuée, dans laquelle il est détecté quelles actions d'entretien sont effectuées par l'utilisateur respectif parmi une pluralité d'actions d'entretien prédéfinies pour entretenir l'appareil ménager (1) pendant une période de temps prédéterminée et/ou une certaine séquence de commandes, et/ou
dans l'étape a), une détection de charge spécifique à l'utilisateur est effectuée, dans laquelle il est détecté quelles actions de chargement et/ou actions de déchargement sont réalisées par l'utilisateur respectif pendant une période de temps prédéterminée et/ou une certaine séquence de commandes, et en outre
au moins un affichage dans une zone d'affichage (21) de la surface de commande (17) est adapté de façon spécifique à l'utilisateur pour l'utilisateur respectif en fonction de la détection d'entretien spécifique à l'utilisateur et/ou en fonction de la détection de charge spécifique à l'utilisateur.

2. Procédé selon la revendication 1, **caractérisé en ce que** la surface de commande (17) de l'interface utilisateur (16) comprend un certain nombre d'éléments de commande (18, 19), dans lequel au moins une fonction de l'appareil électroménager (1) est associée à chacun des éléments de commande (18, 19),
dans lequel, dans l'étape a), une détection d'actionnement spécifique à l'utilisateur est effectuée, dans laquelle il est détecté quel élément de commande (18, 19) ou quels éléments de commande (18, 19) sont actionnés par l'utilisateur respectif pendant une période prédéterminée et/ou une séquence de commandes prédéterminée.

3. Procédé selon la revendication 2, **caractérisé en ce que**, dans l'étape b) un type de représentation de l'élément de commande respectif (18, 19) est adapté spécifiquement à l'utilisateur sur la surface de commande (17) pour l'utilisateur respectif en fonction de la détection d'actionnement spécifique à l'utilisateur.

4. Procédé selon l'une des revendications 1 à 3, **caractérisé en ce que** les actions d'utilisation prédéfinies comprennent en outre une entrée de commande de l'utilisateur pour commander l'appareil électroménager (1), dans lequel l'entrée de commande de l'utilisateur est réalisée par un actionnement d'un élément de commande (18, 19) de l'interface utilisateur (16), par une entrée d'une commande vocale dans une reconnaissance vocale de l'interface utilisateur (16) et/ou par une entrée d'une commande gestuelle dans une reconnaissance gestuelle de l'interface utilisateur (16).

5. Procédé selon l'une des revendications 1 à 4, **caractérisé en ce que** l'au moins une action d'entretien comprend un appoint de sel, un appoint de produit de rinçage, et/ou un nettoyage du filtre de l'appareil électroménager (1).

6. Procédé selon la revendication 4, **caractérisé en ce que**, dans l'étape a), une détection de sélection de programme spécifique à l'utilisateur est effectuée, dans laquelle il est détecté quel programme ou quels programmes sont sélectionnés par l'utilisateur respectif parmi une pluralité de programme prédéfinis de commande de l'appareil électroménager (1) au moyen des entrées de commande pendant une période prédéterminée et/ou une séquence prédéterminée de commandes.

7. Procédé selon la revendication 6, **caractérisé en ce que** l'au moins un élément de commande (18, 19) de la surface de commande (17), qui est associé à un ou plusieurs des programmes prédéfinis, est adapté de façon spécifique à l'utilisateur pour l'utilisateur respectif en fonction de la détection de sélection de programme spécifique à l'utilisateur.

8. Procédé selon l'une des revendications 1 à 7, **caractérisé en ce que** l'utilisateur respectif est reconnu parmi la pluralité d'utilisateurs au moyen d'une entrée d'une combinaison de touches prédéfinie sur l'interface utilisateur (16), au moyen d'une affectation à un appareil de l'utilisateur comprenant l'interface utilisateur (16), au moyen d'une entrée vocale pour entrer une identification de l'utilisateur respectif, au moyen d'une reconnaissance du locuteur pour identifier l'utilisateur respectif, au moyen d'une reconnaissance faciale de l'utilisateur respectif, au moyen d'une reconnaissance d'empreinte digitale de l'utilisateur respectif, au moyen d'une reconnaissance de la main de l'utilisateur respectif, au moyen d'une reconnaissance gestuelle de l'utilisateur respectif et/ou au moyen d'une identification RFID associée à l'utilisateur respectif.

9. Appareil électroménager (1) comprenant :
- une interface utilisateur (16) permettant de commander l'appareil électroménager (1) par une pluralité d'utilisateurs,
- une première unité (24) servant à détecter spécifiquement pour l'utilisateur un certain nombre d'actions d'utilisation prédéfinies d'un utilisateur respectif de la pluralité des utilisateurs lors de la commande de l'appareil électroménager (1), dans lequel les actions d'utilisation prédéfinies comprennent au moins une action d'entretien de l'utilisateur pour entretenir l'appareil électroménager (1), au moins une action de chargement de l'utilisateur pour charger l'appareil électroménager (1) et/ou au moins une action de déchargement de l'utilisateur pour décharger l'appareil électroménager (1),
dans lequel, dans une détection d'entretien spécifique à l'utilisateur, il est détecté quelles actions d'entretien sont réalisées par l'utilisateur respectif parmi une pluralité d'actions d'entretien prédéfinies pour entretenir l'appareil ménager (1) pendant une période de temps prédéterminée et/ou une certaine séquence de commandes, et/ou dans une détection de charge spécifique à l'utilisateur, il est détecté quelles actions de chargement et/ou actions de déchargement sont réalisées par l'utilisateur respectif pendant une période de temps prédéterminée et/ou une certaine séquence de commandes,
- une deuxième unité (25) servant à exciter l'interface utilisateur (16) en fonction des actions d'utilisation de l'utilisateur respectif détectées spécifiquement de la part de l'utilisateur, de manière à fournir une surface de commande (17) spécifique à l'utilisateur respective pour l'utilisateur respectif, et
- au moins un affichage dans une zone d'affichage (21) de la surface de commande (17) qui est adapté de façon spécifique à l'utilisateur pour l'utilisateur respectif en fonction de la détection d'entretien spécifique à l'utilisateur et/ou en fonction de la détection de charge spécifique à l'utilisateur.

10. Appareil électroménager selon la revendication 9, **caractérisé en ce que** l'appareil électroménager (1) est constitué sous forme d'un lave-vaisselle, d'un appareil de cuisson, d'un appareil frigorifique, d'une machine à laver ou d'une machine à café.

11. Produit de programme informatique, comprenant des instructions, qui amènent l'appareil électroménager selon l'une des revendications 9 ou 10 à exécuter les étapes du procédé selon l'une des revendications 1 à 8.
